# EUROPEAN PATENT SPECIFICATION

(11) **EP 4 094 618 B1**
(45) Date of publication and mention of the grant of the patent: **18.12.2024**
(21) Application number: 22175021.9
(22) Date of filing: 24.05.2022
(51) Int. Cl.: A43B 13/12, A43B 13/18, B29D 35/04, B29D 35/14, B29D 35/00

(54) **OUTSOLE FOR FOOTWEAR AND METHOD FOR MANUFACTURING SUCH AN OUTSOLE**
LAUFSOHLE FÜR SCHUHE UND VERFAHREN ZUR HERSTELLUNG EINER SOLCHEN LAUFSOHLE
SEMELLE D'USURE POUR CHAUSSURE ET PROCÉDÉ DE FABRICATION D'UNE TELLE SEMELLE D'USURE

(30) Priority: 25.05.2021 IT 202100013616
(43) Date of publication of application: 30.11.2022
(73) Proprietor: Diadora S.p.A., 31031 Caerano di San Marco (TV) (IT)
(72) Inventor: ARDISSONO, Cristian, 31040 Volpago del Montello (TV) (IT); RISATTI, MICHELE, 31044 Montebelluna (TV) (IT)
(74) Representative: Dragotti & Associati S.R.L.

(56) References cited:
- WO-A1-2010/084367
- WO-A1-2018/095502
- US-A1- 2013 199 711
- US-A1- 2020 297 073
- US-B1- 7 565 754

## Description

The present invention relates to an outsole for footwear. In particular, the present invention relates to an outsole for footwear able to cushion in a uniform manner any impacts acting on the outsole, irrespective as to the body structure of the user or the use of the said outsole. More specifically, the present invention relates to an outsole for footwear able to cushion any impacts acting on the outsole during a walking or running movement, irrespective as to the weight and size of the user.

The present invention relates, moreover, to a method for manufacturing such an outsole.

As is known, whenever a person rests a foot on the ground during a walking or running movement, an impact is created on the shoe and more precisely on the outsole itself.

The way in which the footwear is made may influence the ways in which said impact is perceived by the user.

In order to assess the effect of the impacts on the body of the user of the footwear during a walking or running movement, generally accelerometers or inertial sensors are used, these being intended to be applied directly onto the user's body, in particular in the region of the lower limbs.

The behaviour of the outsole subject to impacts may be analysed instead by measuring what proportion of the impact energy is returned by the material of the outsole. This characteristic is commonly defined as being the "resilience" and allows the various materials which can be used to manufacture an outsole to be classified depending on their response to the impacts acting on them.

It is clear that footwear users may have different physical structures and different foot sizes and that, for this reason, the various models of footwear are produced in a certain number of sizes.

However, if it is known that a variation in the size of outsole from 39 to 48, measured using the French system, corresponds to an increase in its length of about 6 cm and an increase in its width of about 1.5 cm, there is only a minimal increase in the thickness of said outsole.

Furthermore, it is also known that there exists a certain correlation between the foot size and the weight of a user (c.f. in this connection the report *"*The relationship between height, weight and feet-length of the human body" - Mehmood, Ahwan, Sidiqui, International Statistics Conference, January 2009).

As a direct consequence, an outsole with a thickness of about 25 mm may not represent the ideal solution in terms of impact response both for a user weighing 55 kg and for a user weighing 120 kg.

The outsole necessarily constitutes a compromise solution and consequently at least one of the two users will not have an outsole which is best suited to his/her needs.

The object of the present invention is therefore to overcome at least partially the drawbacks mentioned above with reference to the prior art. US 7565754 B1 discloses an outsole according to the preamble of claim 1.

In particular, a first aim of the present invention is to provide an outsole for footwear which is able to provide a uniform response when subjected to different impact loads.

A further aim of the present invention is to provide an outsole for footwear which has a uniform response to different impact loads irrespective as to the size of the user and/or the use.

Yet another aim of the present invention is to provide an outsole for footwear which is able to provide a uniform response when subjected to different impact loads and which has a simplified structure.

Finally, an aim of the present invention is to provide a method which facilitates the manufacturing of said outsole.

The object and aims indicated above are achieved by an outsole according to that claimed in Claim 1 and by a method according to that claimed in Claim 10.

The characteristic features and the further advantages of the invention will emerge from the description hereinbelow of an example of embodiment, provided by way of a non-limiting illustration, with reference to the accompanying drawings in which:
- Figure 1 shows in schematic form a side view of an outsole for footwear according to the claimed invention;
- Figure 2 shows in schematic form a cross-sectional view along the plane indicated by II-II in Figure 1;
- Figure 3 shows in schematic form a cross-sectional view along the plane indicated by III-III in Figure 1;
- Figure 4 shows a perspective view from above of a component of the outsole according to the claimed invention;
- Figure 5 shows a perspective view, from below, of the component according to Figure 4;
- Figure 6 shows a perspective view, from below, of a detail of the component shown in Figure 4;
- Figures 7 shows in schematic form an enlarged view of the detail of Figure 1 indicated by the letter A, in a deformed configuration following the application of a vertical load;
- Figure 8 shows in schematic form a view, from below, of the heel portion of an outsole according to the claimed invention;
- Figure 9 is a figure similar to Figure 8 which shows in schematic form how the heel portion is deformed following and therefore as a result of the application of a vertical load;
- Figures 10, 11, 12a and 12b illustrate in schematic form different steps of the method according to the claimed invention;
- Figures 13 and 14 illustrate in schematic form the operation of a measurement device designed to be used to calculate the impact response of the outsole according to the claimed invention;
- Figure 15 shows in schematic form a comparison between the results obtained in terms of an impact response of impacts with different intensities between an outsole of the known type and an outsole according to the claimed invention.

With reference to the attached figures, an outsole according to the present invention is indicated overall by the reference number 1.

In the continuation of the present description, "front" will be used to identify the part of the outsole, or of its single components, which during use is relatively closer to the toe of the foot, while "rear" will be used to identify the part of the outsole, or of its single components, which during use is relatively closer to the heel.

In a similar manner "top" will be used to identify the part of the outsole, or of its single components, which during use is relatively further from the ground, while "bottom" will be used to identify the part of the outsole, or of its single components, which during use is relatively closer to the ground.

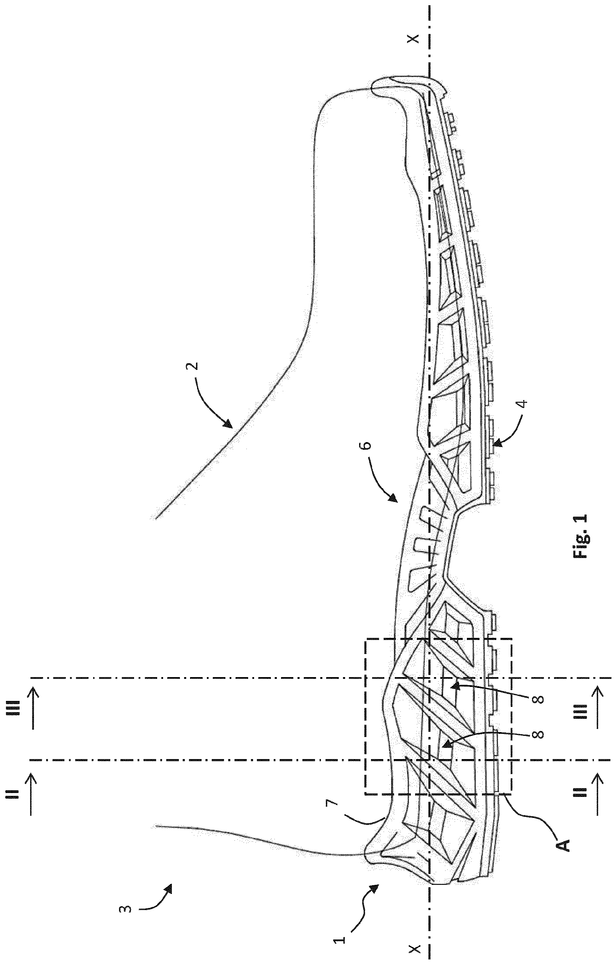

As shown in Figure 1, the outsole 1 is intended to be joined to an upper 2 in order to form the footwear 3. The upper 2 may be made using the usual materials such as leather, imitation leather and/or fabric.

The footwear 3, in turn, may be walking, sports or safety footwear.

In this latter case, preferably, the footwear 3 is provided, at the toe, with a rigid protection tip and, in some cases, with an anti-perforation layer arranged in the region of the outsole 1.

The outsole 1 extends along a toe-to-heel direction X and comprises a tread 4 arranged on the bottom surface of a midsole 6.

The tread 4 and the midsole 6 are elastic structural elements.

Preferably, they are made using a polyurethane material. By way of example, the tread 4 may be made using a compact polyurethane material, i.e. with a density greater than 1 kg/dm³, while the midsole 6 may be made using an expanded polyurethane material, i.e. with a density less than 1 kg/dm³, preferably less than 0.4 - 0.5 kg/dm³.

Alternatively, the tread 4 may be made using a thermoplastic polyurethane material, commonly called TPU, or a vulcanized rubber, while the midsole 6 may be made of ethylene vinyl acetate (EVA) or using known supercritical expanded compounds based on polyamide, polyethylene or polyolefin.

As shown in Figures 1-3, the midsole 6 has a heel portion 7 with at least one through-opening 8 which extends transversely with respect to the toe-to-heel direction X. In other words, the through-opening 8 crosses from one side to the other the side surfaces of the midsole 6.

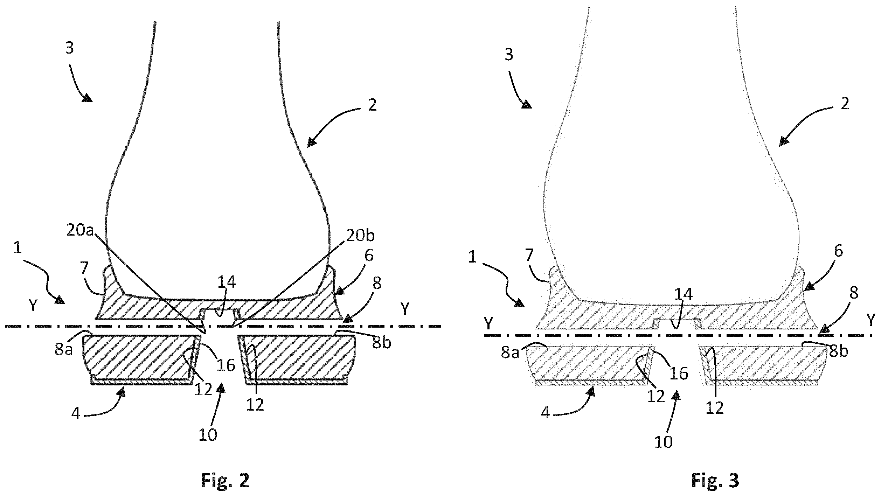

The direction along which the through-opening 8 extends is indicated by the letter Y in Figures 2 and 3.

This through-opening 8 does not have a ventilation function. As will become clear from the description below, it has the function, in combination with other technical features of the outsole, of ensuring a uniform response of the outsole to impacts.

Preferably, the heel portion 7 of the midsole 6 is provided with two through-openings 8 as can be seen from Fig. 1. However, different embodiments of the outsole 1 may have a greater number of through-openings 8. Advantageously, in the case of more than one opening 8, these openings are formed in the heel portion 7 of the midsole 6 so as to be substantially parallel to each other.

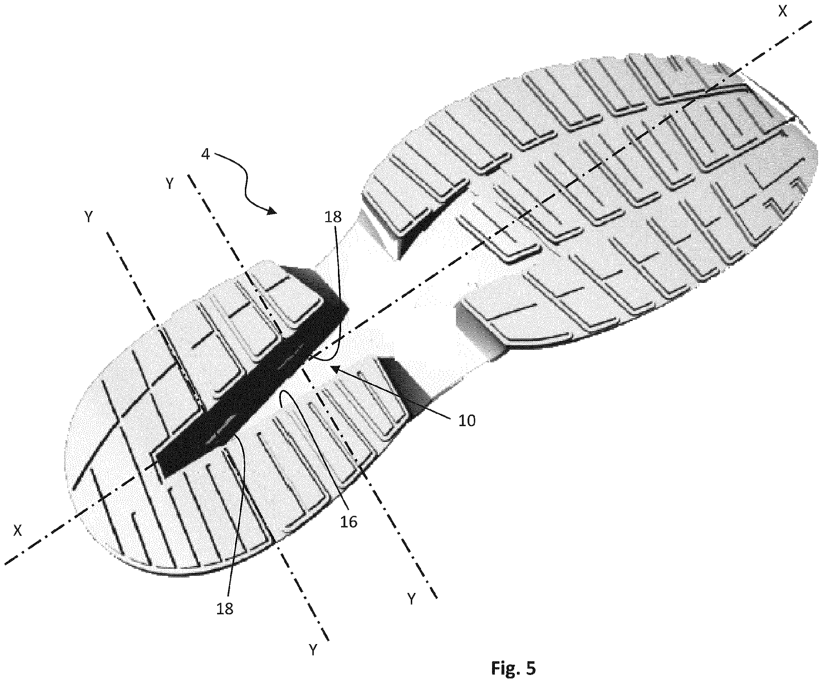

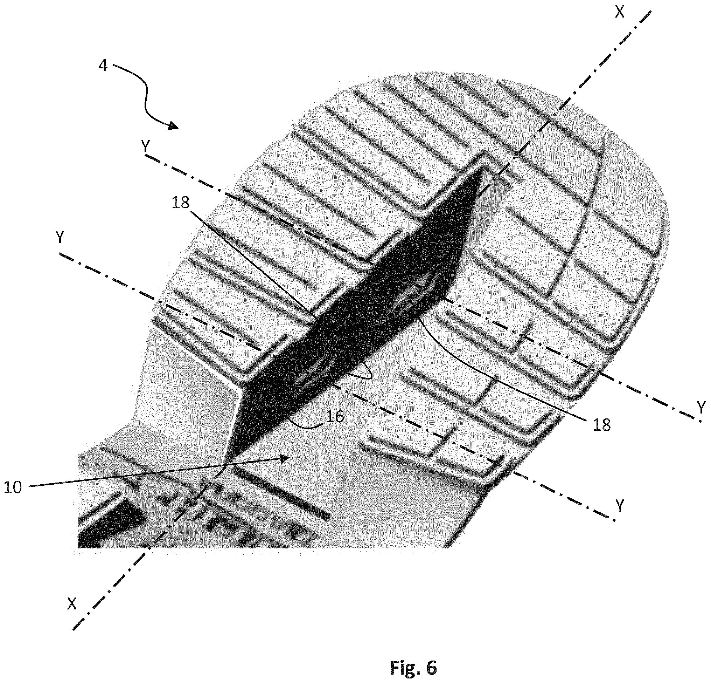

The heel portion 7 of the midsole 6 is moreover provided with a slit 10 which extends along the toe-to-heel direction X and which intercepts each through-opening 8, dividing it up into two parts 8a, 8b (see Figures 2-3). Preferably, the slit 10 is provided in a central part of the heel portion 7 (see Figures 5 and 6).

The slit 10 is open at the front and is delimited by a side wall 12 which extends downwards from a base portion 14 of the slit 10.

As clearly shown in Figures 2 and 3, in accordance with the invention, the tread 4 comprises a portion 16 which extends inside the slit 10 so as to cover solely the side wall 12, leaving the base portion 14 exposed.

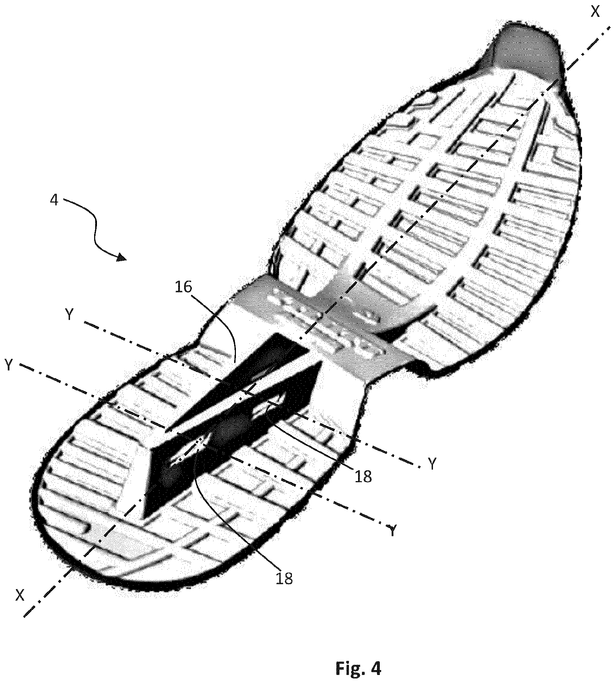

Advantageously, the portion 16 of the tread 4 is provided with at least two holes 18 (see Figure 4) which are designed to match the holes 20a, 20b defined at the intersection between the two parts 8a,8b, into which each opening 8 is divided, and the slit 10.

In this way, although the tread 4 extends inside the slit, each opening 8 remains a through-opening.

Preferably, the tread 4 has a uniform thickness. Said thickness, excluding any reliefs present on the bottom surface, is preferably between 0.5 mm and 5 mm. Consequently, the portion 16 of the tread which extends inside the slit 10 has preferably the same thickness as the tread portion provided on the bottom surface of the midsole 6.

As shown in the attached figures, preferably the slit 10 has a profile, measured along the toe-to-heel direction X, which is V-shaped, wherein opposite portions of the side wall 12 diverge slightly, extending towards the front opening.

Alternatively, according to another embodiment not shown in the attached figures, the slit 10 has a profile 10, measured along the toe-to-heel direction X, which is U-shaped, wherein the opposite portions of the side wall 12 run substantially parallel to each other towards the front opening.

Preferably, in both embodiments, i.e. V-shaped slit or U-shaped slit, the profile of the slit encloses an area of between 5 cm² and 40 cm².

In the case of a V-shaped slit, the front opening of the slit has preferably a width of between 20 mm and 30 mm, while the portion opposite the front opening, in other words the portion which defines the base of the V, has a width of between 8 mm and 12 mm.

In the case of a U-shaped slit, the slit has a width, calculated along the direction Y, which is substantially constant and between 20 mm and 35 mm.

With reference to the opening or the through-openings 8 formed in the heel portion 7 of the midsole 6, they advantageously have a circular form.

In an alternative embodiment, these through-openings 8 may have a quadrilateral - preferably square - cross-section.

As mentioned, the slit 10 crosses each opening 8, dividing it into two separate parts 8a, 8b.

Each of these parts 8a, 8b has preferably a length, calculated along the direction Y, of between 5 mm and 30 mm, even more preferably between 15 mm and 25 mm. The thickness of these parts, in turn, is preferably between 2 mm and 15 mm, even more preferably between 3 mm and 6 mm.

The combination of the through-openings 8, of the slit 10 and of the tread portion 16, which lines the side walls 12 of the slit 10, leaving exposed the corresponding base portion 14, influences the behaviour of the outsole 1 in response to any impacts acting on it.

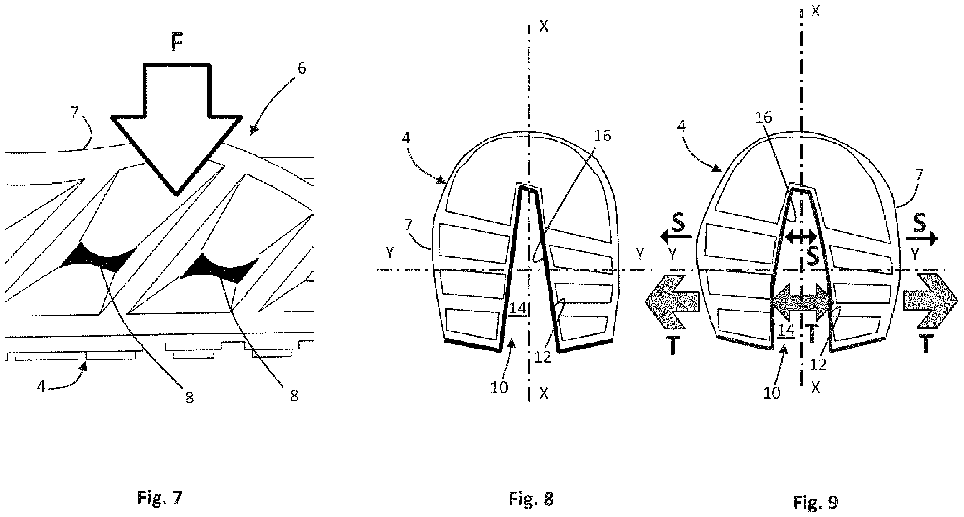

Reference is now made to Figures 7-9.

In Figure 7 the arrow F indicates in schematic form the impact energy applied to the heel portion 7 of the midsole 6. This impact energy depends on the weight of the user and the speed with which the outsole hits the ground.

Experimental tests carried out by the applicant of the present application on the outsole according to the invention have shown how the moment an impact energy is applied in the direction indicated by the arrow F, firstly there is a deformation of the material forming the midsole 6, this being followed, if the impact energy increases, by the deformation of the through-openings 8. In order to highlight this deformation, in Figure 7 the through-openings 8 have been coloured black so as to show how their cross-section has been subjected to a vertical crushing force.

A similar effect may be noted when viewing from below the heel portion of the outsole (see Figures 8 and 9).

Above a certain level of impact energy, in fact, the heel portion of the outsole tends to expand outwards. This expansion affects firstly solely the heel portion in the vicinity of the front opening of the slit 10, since it is surrounded by a smaller quantity of material. This deformation is indicated schematically in Figure 9 by the arrows T.

Thereafter, when the impact energy increases, there is an expansion of the heel portion also in the region of the narrowest portion of the slit 10. This expansion is indicated schematically in Figure 9 by the arrows S.

The lateral expansion of the heel is allowed by the fact that the tread portion 16 does not line the base portion 14 of the slit. The tread 4, therefore, while being stably fixed to the midsole 6, does not oppose the elastic deformation of the material of the midsole 6.

The deformation of the through-openings 8 (see Figure 7) together with the lateral expansion of the heel portion of the outsole (see Figure 9), which is favoured by the configuration of the slit 10 and by the specific arrangement of the tread 16 inside said slit 10, allow the outsole to store a greater quantity of impact energy compared to the known solutions, so as to be able to return it in such a way as to obtain a more uniform response of the outsole to impacts acting on it.

The behaviour of the outsole described above in qualitative terms was also confirmed by the numerical measurement of the quantity of energy which the outsole according to the invention is able to return following an impact.

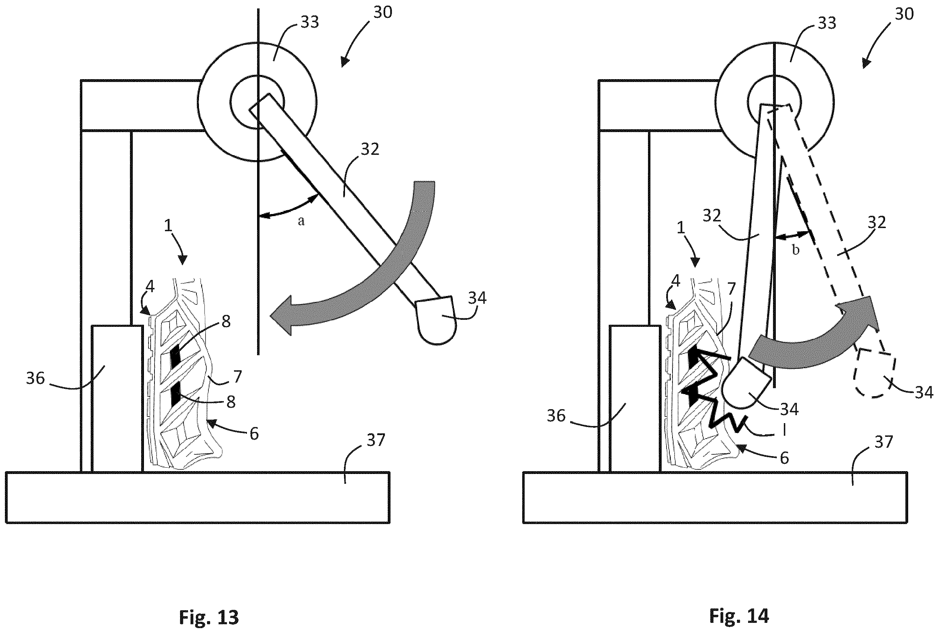

In such tests a pendulum device 30, schematically shown in Figures 13 and 14, was used.

The pendulum 30 consists of an arm 32 having a first end rotatably fastened to a support 33. A hammer 34 is fixed to the opposite free end. The outsole 1 to be tested is fixed to a support 36 which extends vertically from the base 37 of the pendulum.

The outsole is fixed to the support so as to maintain therefore a vertical position.

The test carried out by means of the pendulum 30 consists in raising the arm 32 so that it defines with the vertical axis passing through the support 33 a first angle "a".

Then the arm 32 is left free so that the hammer 34 is able to strike the outsole (the impact in Figure 14 is indicated schematically by means of the broken line I) and to rebound into a new position - indicated by means of broken lines in Figure 14 - which is measured by means of a second angle "b".

On a theoretical level, if all the impact energy were to be returned by the outsole, the second angle "b" would be equal to the first angle "a".

In reality, the second angle "b" is always less than the first angle "a". By determining the ratio between the first angle "a" and the second angle "b" and multiplying the result by 100 it is possible to determine the percentage of energy which is returned by the outsole.

The impact energy applied to the outsole to be tested depends on the weight of the hammer 34 and the first angle "a", i.e. the starting angle. By varying these parameters it is possible to set different values for the impact energy, so as to simulate various users and different modes of use (walking or running).

In particular, during the tests carried out with the pendulum 30, the impact energy applied to the outsole was varied between 2J and 12J with intervals of 0.5J.

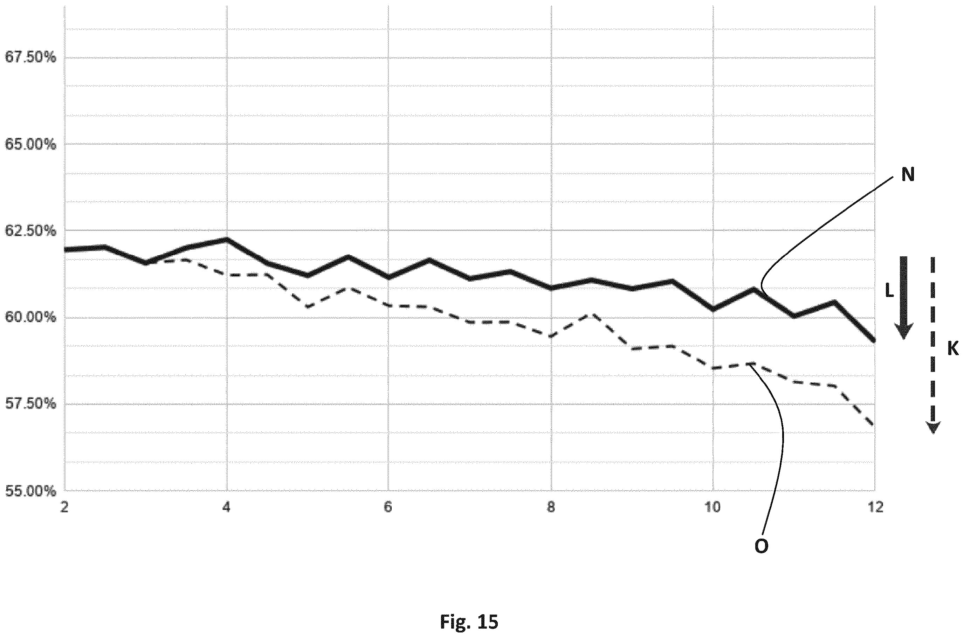

The results obtained are shown in the graph of Figure 15 where the x axis shows the impact energy value measured in joules applied to the outsole and the y axis shows the percentage of energy returned by the outsole.

In particular, the continuous line N relates to the tests carried out on the outsole according to the invention, while the broken line O relates to the same tests, but carried out on a polyurethane outsole without the through-holes 8, the slit 10 and the tread arrangement on the side wall of the slit.

From the graph it can be seen how in both cases the quantity of energy returned by the outsole diminishes with an increase in the impact energy. However, whereas in an outsole of the conventional type there is reduction in the amount of energy absorbed equal to about 5% over the range 2J to 12J, in an outsole according to the invention, said reduction is equal to about half said amount.

For easier understanding, in the graph of Figure 15, the reduction in return of the impact energy received is schematically indicated by the arrow K, in the case of a conventional outsole, and by the arrow L, in the case of the outsole according to the invention.

The tests carried out show how the outsole according to the invention is able to provide a more uniform response to different energy impacts, for example generated by users with a different body structure and/or by a different use of the footwear.

In other words, different users will perceive the same response of the outsole to impacts of varying intensity, unlike that which occurs with conventional outsoles.

As already mentioned, the present invention also relates to a method for manufacturing the outsole 1 described above.

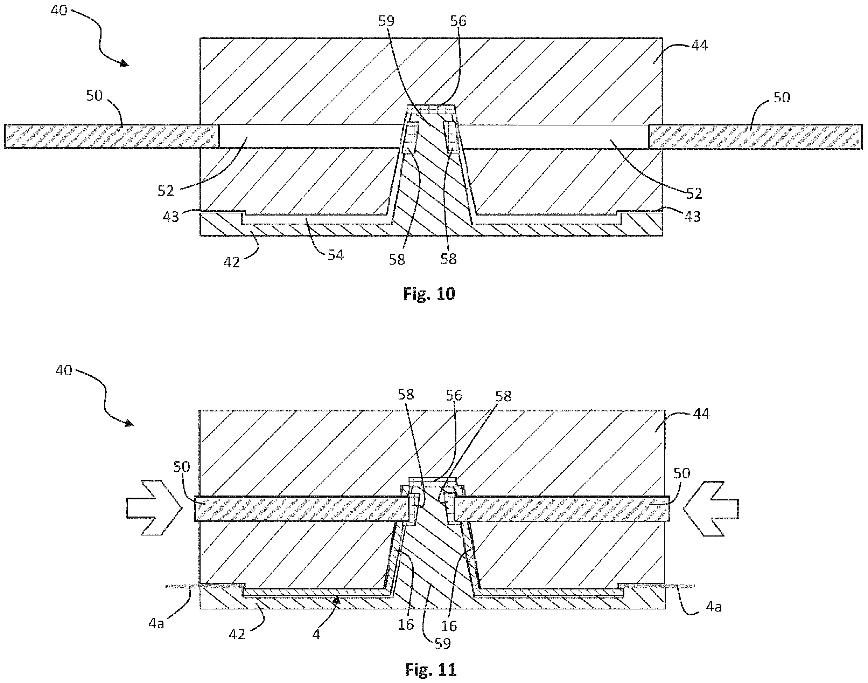

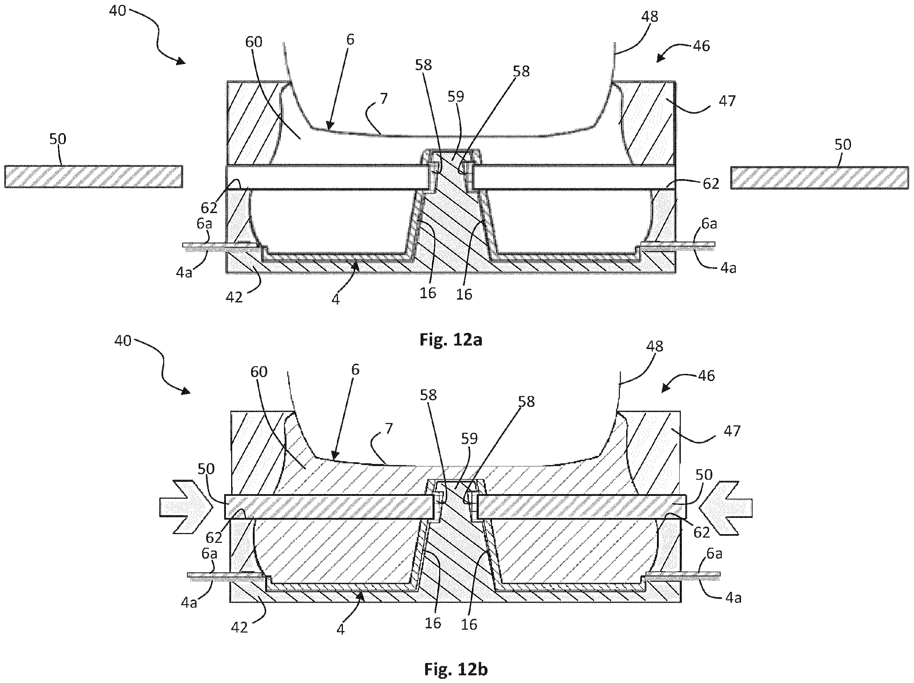

Said method comprises the following steps:
a) providing a mould 40 comprising at least one base 42, a first lid 44 and a second lid 46; the base 42 and the first lid 44 being intended to be put in close proximity to each other to define a first mould cavity 54 for moulding the tread 4 (see Figures 10 and 11) and the base 42 and the second lid 46 being intended to be put in close proximity to each other to define a second mould cavity 60 for moulding the midsole 6 (see Figure 12a), the second lid 46 being provided with guide seats 62 designed to slidably house at least two movable pistons 50 intended to form the through-openings 8 of the midsole 6; the pistons 50 being movable between a retracted condition where they do not engage with the guide seats 52 (see Figure 12a) and an operating condition where they are inserted inside said guide seats 62 (see Figure 12b);
b) relative positioning of the base 42 and the first lid 44 so as to define the first mould cavity 54 (Figure 10);
c) moulding the tread 4 inside the first mould cavity 54 (Figure 11);
d) relative positioning of the base 42 and the second lid 46, with the movable pistons 50 in the operating condition, so as to define the second mould cavity 60 (Figure 12b);
e) moulding the midsole 6 inside the second mould cavity 60.

The method according to the invention is characterized in that it comprises a step f) of providing an insert 56 of elastomer material intended to be placed between the base 42 and the first lid 44 during moulding of the tread 4 inside the first mould cavity 54 in order to form a seal which prevents the moulding material from flowing into the base portion 14 of the slit 10.

Said insert 56 is intended to be compressed when the base 42 and first lid 44 are put in close proximity to each other. Advantageously, the insert 56 prevents the material of the tread from covering the base portion 14 of the slit 10 and prevents moulding burrs from forming in this base portion 14. Said moulding burrs, in fact, would be difficult to remove.

Advantageously, said insert 56 is fixed to the bottom surface of the first lid 44 so as to face the top of a projection 59 of the base 42 intended to form the slit 10.

Preferably, the insert 56 is made using an elastomer material which belongs to the family of silicones.

The moulding of the tread and the midsole is carried out preferably by means of an injection moulding process. For example, by means of the injection of polyurethane or EVA-based mixtures.

Alternatively, the tread may be made by means of compression-moulding of vulcanized rubber.

In order to prevent air bubbles from remaining trapped inside the tread 4, the base 42 and first lid 44 are designed to leave, once they have been put in close proximity to each other, a perimetral slit 43 which extends outside the first mould cavity 54.

The so-called moulding burr 4a will form in the region of this slit 43, once the tread 4 has been moulded.

Similarly, the base 42 and second lid 46 are designed to leave, once put in close proximity to each other, a perimetral slit which extends outside the second mould cavity 60.

In the region of this slit, once moulding of the midsole 6 has been carried out, a further moulding burr 6a will form, said burr being intended to be superimposed on the previously formed moulding burr 4a.

Both moulding burrs 4a, 6a will be removed at the end of the moulding operations.

Advantageously, the first lid 44 may also be provided with seats 52 designed to receive the movable pistons 50. These pistons 50 are movable inside said seats 52 so as to move between a first configuration, where they are outside the seats 52, and a second configuration, where they are inserted inside the seats 52 so as to abut against the sides of the projection 59.

The tread moulding step c) is advantageously carried out with the movable pistons 50 in the second configuration, i.e. inserted inside the seats 52.

The pistons 50 have the function of forming the holes 18 in the portion 16 of the tread 4. Said holes 18 match the holes 20 defined by the openings 8 in the region of the slit 10.

Advantageously, inserts 58 made of elastomer material, preferably silicone material, are provided along the sides of the projection 59 aligned with the pistons 50.

During the tread moulding step c), the movable pistons 50 in the second configuration are brought into abutment against these inserts 58.

In this way it is ensured that moulding burrs, which are also difficult to remove, do not form in the region of the holes 20.

Advantageously, the second lid 46, as shown in Figures 12a and 12b, may comprise a pair of half-rings 47, divided along a longitudinal plane and intended to abut against the sides of a closing element 48, the bottom surface of which is shaped according to the inner profile of the outsole. The seats 62 housing the movable pistons 50 inside the second lid 46 are preferably formed in the half-rings 47.

In this embodiment,. the step c) of moulding the tread and the step e) of moulding the midsole are carried out by means of an injection moulding process.

Preferably, the closing element 48 may consist of an aluminium last onto which the upper 2 of the footwear 3 may be advantageously fitted.

In this way, the moulding of the midsole, and consequently of the outsole 1, may be carried out by means of a direct injection process onto the upper.

Alternatively, the mould 40 may comprise two different bases. A first base intended to be coupled with the first lid 44 in order to form the first mould cavity 54 and the second base intended to be coupled with the second lid 46 in order to form the second mould cavity 60.

In this case, the inserts 59 are arranged in the region of the first base and the second base.

In this embodiment, the step c) of moulding the tread is carried out using the first base and the first lid, while the step e) of moulding the midsole is carried out using the second base and the second lid, after loading the tread made during the moulding step c) inside the second base.

In this way the method for manufacturing the outsole is carried out in two separate steps which involve the use of two different moulds.

Alternatively, the tread 4 may be made using the first base and the first lid, while the midsole 6 may be made using the second base and the second lid. Thereafter, the outsole may be completed by manually assembling together tread and midsole using a gluing process.

The advantages which may be achieved with the outsole and the method according to the invention are therefore clear from the above description.

The provision of the slit 10, the openings 8 and the tread 4, intended to leave the base portion of the slit 10 exposed, results in an outsole which is able to provide a uniform response when subjected to different impact loads.

In particular, the outsole according to the invention, irrespective as to the use which is made thereof or the physical structure of the user, is able to store the impact energy and return it in a uniform manner.

In this way, different users will be guaranteed the same degree of cushioning in a substantially uniform manner.

Furthermore, by using a mould with inserts made of elastomer material it is advantageously possible to manufacture the outsole according to the invention easily so as to reduce the time and costs of the production process.

## Claims

1. Outsole (1) for footwear (3) extending along a toe-to-heel direction (X) and comprising a tread (4) arranged on a bottom surface of a midsole (6), said midsole (6) having a heel portion (7) with at least one through-opening (8) which extends transversely with respect to said toe-to-heel direction (X); said heel portion (7) being provided with a slit (10) which extends along the toe-to-heel direction (X), intercepting said at least one through-opening (8) so as to divide it into two parts (8a, 8b); said slit (10) being open at the front and being delimited by a side wall (12) which extends downwards from a base portion (14), said outsole (1) being **characterized in that** the tread (4) comprises a portion (16) which extends inside said slit (10), so as to cover solely the side wall (12) leaving exposed the base portion (14) of the slit (10), wherein said portion (16) of the tread (4) is provided with at least two holes (18) which are designed to match the holes (20a, 20b) defined at the intersection between the two parts (8a, 8b), into which said at least one opening (8) is divided, and the slit (10), so that, although the tread (4) extends inside the slit (10), each said at least one opening (8) remains a through-opening.

2. Outsole (1) according to Claim 1, **characterized in that** said slit (10) is provided in a central part of the heel portion (7).

3. Outsole (1) according to any one of the preceding claims, **characterized in that** said slit (10) has a profile, measured along the toe-to-heel direction (X), which is V-shaped or U-shaped.

4. Outsole (1) according to Claim 3, **characterized in that** the profile of the slit (10) encloses an area of between 5 cm² e 40 cm².

5. Outsole (1) according to Claim 3, **characterized in that** the slit with a V-shaped profile has a front opening with a width of between 20 mm and 30 mm; the portion opposite to said front opening having a width of between 8 mm and 12 mm.

6. Outsole (1) according to Claim 3, **characterized in that** the slit with a U-shaped profile has a substantially constant width of between 20 mm and 35 mm.

7. Outsole (1) according to any one of the preceding claims, **characterized in that** said at least one through-opening (8) has a cross-section with a circular form or quadrilateral form.

8. Outsole (1) according to any one of the preceding claims, **characterized in that** each of the two parts (8a, 8b) into which said at least one opening (8) is divided by the slit (10) has a length, calculated along the Y direction, of between 5 mm and 30 mm, preferably between 15 mm and 25 mm; the thickness of each of these parts (8a, 8b) being between 2 mm and 15 mm, preferably between 3 mm and 6 mm.

9. Outsole (1) according to any one of the preceding claims, **characterized in that** the tread (4) and the midsole (6) are elastic structural elements; said elements (4, 6) being made of polyurethane material.

10. Method for manufacturing an outsole (1) for footwear (3) according to any one of the preceding claims, said method comprising the steps of:
a) providing a mould (40) comprising at least one base (42), a first lid (44) and a second lid (46); the base (42) and the first lid (44) being intended to be put in close proximity to each other so as to define a first mould cavity (54) for moulding the tread (4) and the base (42) and the second lid (46) being intended to be put in close proximity to each other to define a second mould cavity (60) for moulding the midsole (6); the second lid (46) being provided with guide seats (32) designed to slidably house at least two movable pistons (50) intended to form said at least one through-opening (8) of the midsole (6); the pistons (50) being movable between a retracted condition where they do not engage with the guide seats (62) of the second lid (46) and an operating condition where they are inserted inside said guide seats (62);
b) relative positioning of the base (42) and the first lid (44) so as to define the first mould cavity (54);
c) moulding the tread (4) inside the first mould cavity (54);
d) relative positioning of the base (42) and the second lid (46) with the movable pistons (50) in the operating condition, so as to define the second mould cavity (60);
e) moulding the midsole (6) inside the second mould cavity (60);
said method being **characterized in that** it comprises a step f) of providing an insert (56) of elastomer material intended to be placed between the base (42) and the first lid (44) during moulding of the tread (4) inside the first mould cavity (54) in order to form a seal which prevents the moulding material from flowing into the base portion (14) of the slit (10).

11. Method according to Claim 10, **characterized in that** said insert (56) is fixed to a bottom surface of the first lid (44), so as to face the top of a projection (59) of the base (42) intended to form the slit (10).

12. Method according to Claim 10, **characterized in that** said insert (56) is made of an elastomer material belonging to the family of silicones.

13. Method according to Claim 11, **characterized in that** the first lid (44) is provided with seats (52) suitable for receiving the movable pistons (50); said pistons (50) being movable inside said seats (52) so as to move between a first configuration, where they are outside the seats (52), and a second configuration, where they are inserted inside the seats (52) so as to abut against the sides of the projection (59); the step c) of moulding the tread (4) being carried out with the movable pistons (50) in the second configuration.

14. Method according to Claim 13, **characterized in that** it comprises the providing of inserts (58) made of elastomer material along the sides of the projection (59); during the step c) of moulding the tread (4) the movable pistons in the second configuration being brought into abutment against said inserts (58).

15. Method according to Claim 10, **characterized in that** the second lid (46) comprises a pair of half-rings (47) and a closing element (48); the receiving seats (62) being arranged inside the half-rings (47) and the bottom surface of the closing element (48) being shaped according to the inner profile of the outsole (1); the step c) of moulding the tread (4) and the step e) of moulding the midsole (6) being carried out by means of an injection-moulding process.

16. Method according to Claim 15, **characterized in that** the closing element (48) consists of a last onto which the upper (2) of the footwear (3) is fitted; the step e) of moulding the midsole (6) being carried out by means of a process of direct injection onto the upper.

17. Method according to Claim 10, **characterized in that** the mould (40) comprises two separate bases; a first base being intended to be coupled with the first lid (44) in order to form said first mould cavity (54) and a second base being intended to be coupled with the second lid (46) in order to form said second mould cavity (60); the step c) of moulding the tread being carried out using the first base and the first lid, while the step e) of moulding the midsole is carried out using the second base and the second lid, after loading inside the second base the tread made in the moulding step c).

## Patentansprüche

1. Laufsohle (1) für Schuhwerk (3), die sich entlang einer Richtung von der Zehe zur Ferse (X) erstreckt und eine Lauffläche (4) umfasst, die auf einer unteren Oberfläche einer Zwischensohle (6) angeordnet ist, wobei die Zwischensohle (6) einen Fersenabschnitt (7) mit mindestens einer Durchgangsöffnung (8) aufweist, die sich quer in Bezug auf die Richtung von der Spitze zur Ferse (X) erstreckt; wobei der Fersenabschnitt (7) mit einem Schlitz (10) versehen ist, der sich entlang der Richtung von der Spitze zur Ferse (X) erstreckt und die mindestens eine Durchgangsöffnung (8) unterbricht, um sie in zwei Teile (8a, 8b) zu teilen; wobei der Schlitz (10) an der Vorderseite offen ist und durch eine Seitenwand (12) begrenzt wird, die sich von einem Basisabschnitt (14) nach unten erstreckt, wobei die Laufsohle (1) **dadurch gekennzeichnet ist, dass** die Lauffläche (4) einen Abschnitt (16) umfasst, der sich in des Schlitzes (10) erstreckt, so dass er nur die Seitenwand (12) bedeckt und den Basisabschnitt (14) des Schlitzes (10) freilässt, wobei der Abschnitt (16) der Lauffläche (4) mit mindestens zwei Löchern (18) versehen ist die so gestaltet sind, dass sie zu den Löchern (20a, 20b) passen, die an der Schnittstelle zwischen den beiden Teilen (8a, 8b), in die die mindestens eine Öffnung (8) unterteilt ist, und dem Schlitz (10) ausgebildet sind, so dass, obwohl sich die Lauffläche (4) in den Schlitz (10) erstreckt, jede der mindestens einen Öffnung (8) eine Durchgangsöffnung bleibt.

2. Laufsohle (1) nach Anspruch 1, **dadurch gekennzeichnet, dass** der Schlitz (10) in einem Mittelteil des Fersenabschnitts (7) vorgesehen ist.

3. Laufsohle (1) nach einem der vorstehenden Ansprüche, **dadurch gekennzeichnet, dass** der Schlitz (10) ein Profil aufweist, das entlang der Richtung von der Spitze zur Ferse (X) gemessen V-förmig oder U-förmig ist.

4. Laufsohle (1) nach Anspruch 3, **dadurch gekennzeichnet, dass** das Profil des Schlitzes (10) eine Fläche zwischen 5 cm² und 40 cm umschließt².

5. Laufsohle (1) nach Anspruch 3, **dadurch gekennzeichnet, dass** der Schlitz mit V-förmigem Profil eine vordere Öffnung mit einer Breite zwischen 20 mm und 30 mm aufweist; wobei der der vorderen Öffnung gegenüberliegende Abschnitt eine Breite zwischen 8 mm und 12 mm aufweist.

6. Laufsohle (1) nach Anspruch 3, **dadurch gekennzeichnet, dass** der Schlitz mit einem U-förmigen Profil eine im Wesentlichen konstante Breite zwischen 20 mm und 35 mm aufweist.

7. Laufsohle (1) nach einem der vorhergehenden Ansprüche, **dadurch gekennzeichnet, dass** die mindestens eine Durchgangsöffnung (8) einen kreisförmigen oder viereckigen Querschnitt aufweist.

8. Laufsohle (1) gemäß einem der vorstehenden Ansprüche, **dadurch gekennzeichnet, dass** jeder der beiden Teile (8a, 8b), in die die mindestens eine Öffnung (8) durch den Schlitz (10) unterteilt ist, eine entlang der Y-Richtung berechnete Länge zwischen 5 mm und 30 mm, vorzugsweise zwischen 15 mm und 25 mm, beträgt; wobei die Dicke jedes dieser Teile (8a, 8b) zwischen 2 mm und 15 mm, vorzugsweise zwischen 3 mm und 6 mm, beträgt.

9. Laufsohle (1) gemäß einem der vorstehenden Ansprüche, **dadurch gekennzeichnet, dass** die Lauffläche (4) und die Zwischensohle (6) elastische Strukturelemente sind; wobei die Elemente (4, 6) aus Polyurethanmaterial bestehen.

10. Verfahren zur Herstellung einer Laufsohle (1) für Schuhwerk (3) gemäß einem der vorstehenden Ansprüche, wobei das Verfahren die folgenden Schritte umfasst:
a) Bereitstellen einer Form (40), die mindestens eine Basis (42), einen ersten Deckel (44) und einen zweiten Deckel (46) umfasst; wobei die Basis (42) und der erste Deckel (44) dazu vorgesehen sind, in enge Nähe zueinander gebracht zu werden, um einen ersten Formhohlraum (54) zum Formen der Lauffläche (4) und der Basis (42) zu bilden, und wobei der zweite Deckel (46) dazu vorgesehen ist, in unmittelbarer Nähe zueinander angeordnet zu werden, um einen zweiten Formhohlraum (60) zum Formen der Zwischensohle (6) zu bilden ; wobei der zweite Deckel (46) mit Führungssitzen (32) versehen ist, die dazu ausgelegt sind, mindestens zwei bewegliche Kolben (50) aufzunehmen, die dazu bestimmt sind, die mindestens eine Durchgangsöffnung (8) der Zwischensohle (6) zu bilden; wobei die Kolben (50) zwischen einem zurückgezogenen Zustand, in dem sie nicht mit den Führungssitzen (62) des zweiten Deckels (46) in Eingriff stehen, und einem Betriebszustand, in dem sie in die Führungssitze (62) eingesetzt sind, beweglich sind;
b) relative Positionierung der Basis (42) und des ersten Deckels (44), um den ersten Formhohlraum (54) zu definieren;
c) Formen der Lauffläche (4) im ersten Formhohlraum (54);
d) relative Positionierung der Basis (42) und des zweiten Deckels (46), wobei sich die beweglichen Kolben (50) im Betriebszustand befinden, um den zweiten Formhohlraum (60) zu definieren;
e) Formen der Zwischensohle (6) im Inneren des zweiten Formhohlraums (60);
wobei das Verfahren **dadurch gekennzeichnet ist, dass** es einen Schritt f) des Bereitstellens eines Einsatzes (56) aus Elastomermaterial umfasst, der dazu bestimmt ist, während des Formens der Lauffläche (4) im Inneren des ersten Formhohlraums (54) zwischen der Basis (42) und dem ersten Deckel (44) angeordnet zu werden, um eine Dichtung zu bilden, die verhindert, dass das Formmaterial in den Basisabschnitt (14) des Schlitzes (10) fließt.

11. Verfahren nach Anspruch 10, **dadurch gekennzeichnet, dass** der Einsatz (56) an einer unteren Oberfläche des ersten Deckels (44) befestigt ist, so dass er der Oberseite eines Vorsprungs (59) der Basis (42) zugewandt ist, der dazu bestimmt ist, den Schlitz (10) zu bilden.

12. Verfahren nach Anspruch 10, **dadurch gekennzeichnet, dass** der Einsatz (56) aus einem Elastomermaterial besteht, das zur Familie der Silikone gehört.

13. Verfahren nach Anspruch 11, **dadurch gekennzeichnet, dass** der erste Deckel (44) mit Sitzen (52) versehen ist, die zur Aufnahme der beweglichen Kolben (50) geeignet sind; wobei die Kolben (50) innerhalb der Sitze (52) beweglich sind, so dass sie sich zwischen einer ersten Konfiguration, in der sie sich außerhalb der Sitze befinden (52) und einer zweiten Konfiguration, in der sie in die Sitze (52) eingeführt sind, beweglich sind, so dass sie an den Seiten des Vorsprungs (59) anliegen; wobei der Schritt c) des Formens der Lauffläche (4) mit den beweglichen Kolben (50) in der zweiten Konfiguration ausgeführt wird.

14. Verfahren nach Anspruch 13, **dadurch gekennzeichnet, dass** es das Bereitstellen von Einsätzen (58) aus Elastomermaterial entlang der Seiten des Vorsprungs (59) umfasst; wobei während des Schritts c) des Formens der Lauffläche (4) die beweglichen Kolben in der zweiten Konfiguration in Anlage gegen die Einsätze (58) gebracht werden.

15. Verfahren nach Anspruch 10, **dadurch gekennzeichnet, dass** der zweite Deckel (46) ein Paar Halbringe (47) und ein Schließelement (48) umfasst; wobei die aufnehmenden Sitze (62) innerhalb der Halbringe (47) angeordnet sind und die untere Oberfläche des Schließelementes (48) entsprechend dem inneren Profil der Laufsohle (1) geformt ist; wobei der Schritt c) des Formens der Lauffläche (4) und der Schritt e) des Formens der Zwischensohle (6) mittels eines Spritzgussverfahrens durchgeführt werden.

16. Verfahren nach Anspruch 15, **dadurch gekennzeichnet, dass** das Schließelement (48) aus einem Leisten besteht, auf den der Schaft (2) des Schuhwerks (3) aufgesetzt wird; wobei der Schritt e) des Formens der Zwischensohle (6) mittels eines Verfahrens des direkten Spritzgießens auf den Schaft durchgeführt wird.

17. Verfahren nach Anspruch 10, **dadurch gekennzeichnet, dass** die Form (40) zwei separate Basen umfasst; wobei eine erste Basis dazu bestimmt ist, mit dem ersten Deckel (44) verbunden zu werden, um den ersten Formhohlraum (54) zu bilden, und eine zweite Basis dazu bestimmt ist, mit dem zweiten Deckel (46) verbunden zu werden, um den zweiten Formhohlraum (60) zu bilden; wobei der Schritt c) des Formens der Lauffläche unter Verwendung der ersten Basis und des ersten Deckels ausgeführt wird, während der Schritt e) des Formens der Zwischensohle unter Verwendung der zweiten Basis und des zweiten Deckels ausgeführt wird, nachdem die im Formschritt c) hergestellte Lauffläche in die zweite Basis geladen wurde.

## Revendications

1. Semelle extérieure (1) pour chaussure (3) s'étendant le long d'une direction talon-pointe (X) et comprenant une semelle (4) disposée sur une surface inférieure d'une semelle intermédiaire (6), ladite semelle intermédiaire (6) ayant une partie de talon (7) avec au moins une ouverture traversante (8) qui s'étend transversalement par rapport à ladite direction talon-pointe (X) ; ladite partie de talon (7) étant pourvue d'une fente (10) qui s'étend le long de la direction talon-pointe (X), interceptant ladite au moins une ouverture traversante (8) de manière à la diviser en deux parties (8a, 8b) ; ladite fente (10) étant ouverte à l'avant et étant délimitée par une paroi latérale (12) qui s'étend vers le bas à partir d'une partie de base (14), ladite semelle extérieure (1) étant **caractérisée en ce que** la semelle (4) comprend une partie (16) qui s'étend à l'intérieur de ladite fente (10), de manière à couvrir uniquement la paroi latérale (12) en laissant exposée la partie de base (14) de la fente (10), dans lequel ladite partie (16) de la semelle (4) est pourvue d'au moins deux trous (18) qui sont conçus pour correspondre aux trous (20a, 20b) définis à l'intersection entre les deux parties (8a, 8b), en laquelle ladite au moins une ouverture (8) est divisée, et la fente (10), de sorte que, bien que la semelle (4) s'étende à l'intérieur de la fente (10), chaque dite au moins une ouverture (8) reste une ouverture traversante.

2. Semelle extérieure (1) selon la revendication 1, **caractérisée en ce que** ladite fente (10) est prévue dans une partie centrale de la partie talon (7).

3. Semelle extérieure (1) selon l'une quelconque des revendications précédentes, **caractérisée en ce que** ladite fente (10) a un profil, mesuré le long de la direction talon-pointe (X), qui est en forme de V ou en forme de U.

4. Semelle extérieure (1) selon la revendication 3, **caractérisée en ce que** le profil de la fente (10) entoure une surface comprise entre 5 cm² et 40 cm².

5. Semelle extérieure (1) selon la revendication 3, **caractérisée en ce que** la fente à profil en V a une ouverture avant d'une largeur comprise entre 20 mm et 30 mm ; la partie opposée à ladite ouverture avant ayant une largeur comprise entre 8 mm et 12 mm.

6. Semelle extérieure (1) selon la revendication 3, **caractérisée en ce que** la fente à profil en U a une largeur sensiblement constante comprise entre 20 mm et 35 mm.

7. Semelle extérieure (1) selon l'une quelconque des revendications précédentes, **caractérisée en ce que** ladite au moins une ouverture traversante (8) a une section transversale de forme circulaire ou de forme quadrilatérale.

8. Semelle extérieure (1) selon l'une quelconque des revendications précédentes, **caractérisée en ce que** chacune des deux parties (8a, 8b) dans laquelle ladite au moins une ouverture (8) est divisée par la fente (10) a une longueur, calculée le long de la direction Y, comprise entre 5 mm et 30 mm, de préférence entre 15 mm et 25 mm ; l'épaisseur de chacune de ces parties (8a, 8b) étant comprise entre 2 mm et 15 mm, de préférence entre 3 mm et 6 mm.

9. Semelle extérieure (1) selon l'une quelconque des revendications précédentes, **caractérisée en ce que** la semelle (4) et la semelle intermédiaire (6) sont des éléments structurels élastiques ; lesdits éléments (4, 6) étant constitués de matériau polyuréthane.

10. Procédé de fabrication d'une semelle extérieure (1) pour chaussure (3) selon l'une quelconque des revendications précédentes, ledit procédé comprenant les étapes consistant à:
a) fournir un moule (40) comprenant au moins une base (42), un premier couvercle (44) et un second couvercle (46) ; la base (42) et le premier couvercle (44) étant destinés à être placés à proximité immédiate l'un de l'autre de manière à définir une première cavité de moule (54) pour mouler la semelle (4) et la base (42) et le second couvercle (46) étant destinés à être placés à proximité immédiate l'un de l'autre pour définir une seconde cavité de moule (60) pour mouler la semelle intermédiaire (6) ; le second couvercle (46) étant pourvu de sièges de guidage (32) conçus pour loger de manière coulissante au moins deux pistons mobiles (50) destinés à former ladite au moins une ouverture traversante (8) de la semelle intermédiaire (6); les pistons (50) étant mobiles entre une condition rétractée où ils ne s'engagent pas avec les sièges de guidage (62) du second couvercle (46) et un état de fonctionnement où ils sont insérés à l'intérieur desdits sièges de guidage (62);
b) positionner relativement la base (42) et le premier couvercle (44) de manière à définir la première cavité de moule (54);
c) mouler la semelle (4) à l'intérieur de la première cavité de moule (54);
d) positionner relativement la base (42) et le second couvercle (46) avec les pistons mobiles (50) dans l'état de fonctionnement, de manière à définir la seconde cavité de moule (60);
e) mouler la semelle intermédiaire (6) à l'intérieur de la seconde cavité de moulage (60);
ledit procédé étant **caractérisé en ce qu'**il comprend une étape f) de fourniture d'un insert (56) en matériau élastomère destiné à être placé entre la base (42) et le premier couvercle (44) lors du moulage de la semelle (4) à l'intérieur de la première cavité de moule (54) afin de former un joint qui empêche le matériau de moulage de s'écouler dans la partie de base (14) de la fente (10).

11. Procédé selon la revendication 10, **caractérisé en ce que** ledit insert (56) est fixé à une surface inférieure du premier couvercle (44), de manière à faire face au sommet d'une saillie (59) de la base (42) destinée à former la fente (10).

12. Procédé selon la revendication 10, **caractérisé en ce que** ledit insert (56) est réalisé en un matériau élastomère appartenant à la famille des silicones.

13. Procédé selon la revendication 11, **caractérisé en ce que** le premier couvercle (44) est pourvu de sièges (52) appropriés pour recevoir les pistons mobiles (50) ; lesdits pistons (50) étant mobiles à l'intérieur desdits sièges (52) de manière à se déplacer entre une première configuration, où ils sont à l'extérieur des sièges (52), et une seconde configuration, où ils sont insérés à l'intérieur des sièges (52) de manière à venir en butée contre les côtés de la saillie (59); l'étape c) de moulage de la semelle (4) étant effectuée avec les pistons mobiles (50) dans la seconde configuration.

14. Procédé selon la revendication 13, **caractérisé en ce qu'**il comprend la fourniture d'inserts (58) en matériau élastomère le long des côtés de la saillie (59); au cours de l'étape c) de moulage de la semelle (4), les pistons mobiles dans la seconde configuration sont amenés en butée contre lesdits inserts (58).

15. Procédé selon la revendication 10, **caractérisé en ce que** le second couvercle (46) comprend une paire de demi-anneaux (47) et un élément de fermeture (48); les sièges de réception (62) étant disposés à l'intérieur des demi-anneaux (47) et la surface inférieure de l'élément de fermeture (48) étant formée selon le profil intérieur de la semelle extérieure (1); l'étape c) de moulage de la semelle (4) et l'étape e) de moulage de la semelle intermédiaire (6) étant effectuées au moyen d'un procédé de moulage par injection.

16. Procédé selon la revendication 15, **caractérisé en ce que** l'élément de fermeture (48) consiste en une forme sur laquelle la tige (2) de la chaussure (3) est ajustée; l'étape e) de moulage de la semelle intermédiaire (6) étant effectuée au moyen d'un processus d'injection directe sur la tige.

17. Procédé selon la revendication 10, **caractérisé en ce que** le moule (40) comprend deux bases distinctes; une première base étant destinée à être couplée au premier couvercle (44) afin de former ladite première cavité de moule (54) et une seconde base étant destinée à être couplée au second couvercle (46) afin de former ladite seconde cavité de moule (60); l'étape c) de moulage de la semelle étant effectuée à l'aide de la première base et du premier couvercle, tandis que l'étape e) de moulage de la semelle intermédiaire est effectuée à l'aide de la seconde base et du second couvercle, après chargement à l'intérieur de la seconde base de la semelle réalisée dans l'étape c) de moulage.
